# EUROPÄISCHE PATENTSCHRIFT

(11) **EP 0 881 125 B1**
(45) Veröffentlichungstag und Bekanntmachung des Hinweises auf die Patenterteilung: **22.01.2003**
(21) Anmeldenummer: 98109501.1
(22) Anmeldetag: 26.05.1998
(51) Int. Cl.: B60R 13/10, G09F 7/18

(54) **Wechselhalterung für Gefahrzettel**
Changeable sign holder for warning sign
Panneau de signalisation changeable pour panneau avertisseur

(30) Priorität: 28.05.1997 DE 29709374 U
(43) Veröffentlichungstag der Anmeldung: 02.12.1998
(73) Patentinhaber: Weber, Edgar, 57645 Nister (DE)
(72) Erfinder: Weber, Edgar, 57645 Nister (DE)

(56) Entgegenhaltungen:
- DE-A- 4 105 061
- FR-A- 2 642 208
- US-A- 4 058 918
- US-A- 4 999 938

## Beschreibung

Die Erfindung bezieht sich auf eine Wechselhalterung für Gefahrzettel gemäß den Oberbegriffen der Ansprüche 1 und 2. Derartige Wechselhalterungen sind als bekannt anzusehen. Zur Kennzeichnung von Gefahrguttransporten schreibt der Gesetzgeber außer der Ausrüstung mit bestimmten Warntafeln auch eine Kennzeichnung der Fahrzeuge mit sogenannten "Gefahrzetteln" vor. Diese Gefahrzettel tragen unterschiedliche farbige Symbole und/oder Schriftzeichen.
So gibt es z.B. zur Kennzeichnung von Gefahrguttransporten auf der Straße 21 verschiedene Gefahrzettel.
Bei der Kennzeichnung von Gefahrguttransporten verlangt der Gesetzgeber außerdem, daß die Gefahrzettel entfernt werden müssen oder verdeckt sein müssen, wenn das Fahrzeug kein Gefahrgut transportiert.
In der Praxis wird diese Aufgabenstellung bisher dadurch gelöst, daß diese Gefahrzettel aus vorderseitig bedruckter Selbstklebefolie oder Magnetfolie ausgeführt sind. Da die Selbstklebefolie nur schwer entfernbar ist, hat sich darüberhinaus eine oft gebrauchte technische Anwendung dergestalt herausgebildet, daß die Selbstklebefolie auf eine Blechplatte beiderseitig aufgeklebt ist, wobei dann eine oder mehrere solcher Blechplatten in einer entsprechenden Halterung am Fahrzeug mitgeführt werden.
Die technische Ausführung dieser Halterung ist zumeist ein Rahmen aus Stahlblech, in welchen die mit den Gefahrzetteln beklebten Blechplatten eingeschoben werden. Weiterhin verwendet wird die Ausführung, daß auf einem am Fahrzeug befestigten Blechstreifen 2 Gewindebolzen sitzen, auf welche die mit der Selbstklebefolie beklebten Blechplatten aufgeschoben werden und dann mit z.B. Flügelmuttern arretierbar sind.

Eine weitere in der Praxis seltener anzutreffende Anwendung sieht vor, daß anstelle der Gewindebolzen 2 Schnellverschlüsse angeordnet sind.

Bei Wechselhalterungen für Gefahrenzettel gemäß dem Sland der Technik sind die Blechplatten, welche ein- oder beidseitig die Gefahrzettelsymbole tragen, leicht zu entwenden und könnenauch durch Vibrationen während der Fahrt verloren gehen.

Der im Patentanspruch 1 bzw 2 angegebenen Erfindung liegt das Problem zugrunde, eine Wechselhalterung für Gefahrzettel zu schaffen, wobei sämtliche Gefahrzettel fest mit dem Fahrzeug verbunden sind, aber trotzdem ohne Hilfsmittel leicht und schnell ausgewechselt werden können.

Dieses Problem wird mit den in den Patentansprüchen 1 bzw. 2 aufgeführten Merkmalen gelöst. So ist die Stahlblechhalterung am Fahrzeug angeschraubt, die Schildplatten, welche ein- oder beidseitig die Gefahrzettel tragen sind über Drehscharniere fest mit der Stahlblechhalterung und somit mit dem Fahrzeug verbunden.

Zum Wechseln der Gefahrzettelsymbole wird ein Schnellverschluß geöffnet, welcher sich in der Mitte der Stahlblechhalterung befindet.
Die einzelnen Schildplatten werden über die Drehscharniere aus der Stahlblechhalterung geklappt und können anschließend in geänderter Reihenfolge wieder zurückgeklappt werden, wobei zusätzlich über eine Drehung der Gefahrzettelschildplatten um 180 Grad in der Achse zum Drehscharnier hin auch der Gefahrzettel auf der Rückseite einer solchen Schildplatte in die Sichtfläche gedreht und anschließend in die Stahlblechhalterung eingeklappt werden kann.

Dadurch, daß die geometrische Gestaltung der Stahlblechhalterung von der geforderten Form des Gefahrzettels (ein auf der Spitze stehendes Quadrat von mindestens 250 mm Seitenlänge) gelöst wird, lassen sich eine Vielzahl von Gefahrzettelsymbolen über einzelne Schildplatten darstellen. Hierbei wird die Anzahl der möglichen Symbole dadurch verdoppelt, daß auch die Rückplatte jeder Schild platte in die Sichtfläche geklappt werden kann.

Mit der Erfindung wird somit erreicht, daß alle 21 Gefahrzettel zzgl. einer neutralen Fläche (falls kein Gefahrgut transportiert wird) in einer einzigen Halterung am Fahrzeug mitgeführt werden können. Hierbei sind sämtliche Gefahrzettel fest mit der am Fahrzeug angeschraubten Halterung verbunden. Ein Entwenden oder Verlorengehen der Gefahrzettel ist somit nicht mehr möglich.
Der konstruktive Aufbau der Halterung erlaubt es dem Anwender, selbst zu entscheiden, wieviele und welche Gefahrzettel er je Halterung mitführen möchte.

Hierbei besteht die Minimalkonfiguration aus einer quadratischen Stahlblechhalterung, welche auf der Spitze steht und bei der nur in einer Ecke ein Drehscharnier angeordnet ist, wobei die dort befestigte Schildplatte vorderseitig ein Gefahrzettelsymbol zeigt und rückseitig eine neutrale Fläche.
Aufbauend auf diese Minimalkonfiguration können beliebig viele Gefahrzettelsymbole am Fahrzeug mitgeführt werden, wobei die Stahlblechhalterung dann theoretisch die Form eines Kreises annimmt. In der Praxis häufig anzutreffen sind Ausführungen mit bis zu 6 unterschiedlichen Gefahrzetteln und einer neutralen Fläche.
Diese Anforderung läßt sich mit der erfindungsgemäßen Neuentwicklung besonders gut erfüllen. Die Stahlblechhalterung ist in diesem Fall quadratisch und in jeder Ecke befindet sich ein Drehscharnier, welches eine Schildplatte trägt, die beidseitig mit den Gefahrzettelsymbolen beklebt oder bedruckt ist unter Einschluß einer neutralen Fläche für den Fall, daß die Transporteinheit leer und gereinigt fährt.

Eine weitere vorteilhafte Ausgestaltung der Erfindung ist darin zu sehen, daß diese Wechselhalterung nicht nur im Bereich der Kennzeichnung von Gefahrguttransporten eingesetzt werden kann, sondern in allen möglichen Anwendungen, wo z.B. genau spezifizierte unterschiedliche Sachverhalte beschrieben werden müssen, z.B. zur Kennzeichnung von verschiedenen Aggregatzuständen.

Ein Ausführungsbeispiel der Erfindung wird anhand der Figur 1 bis 2 erläutert. Es zeigen
- Fig. 1:: die Wechselhalterung mit eingeklappten Schildplatten, sodaß nur ein Gefahrzettelsymbol sichtbar ist
- Fig. 2:: die Wechselhalterung mit ausgeklappten Schildplatten während des Wechselvorgangs

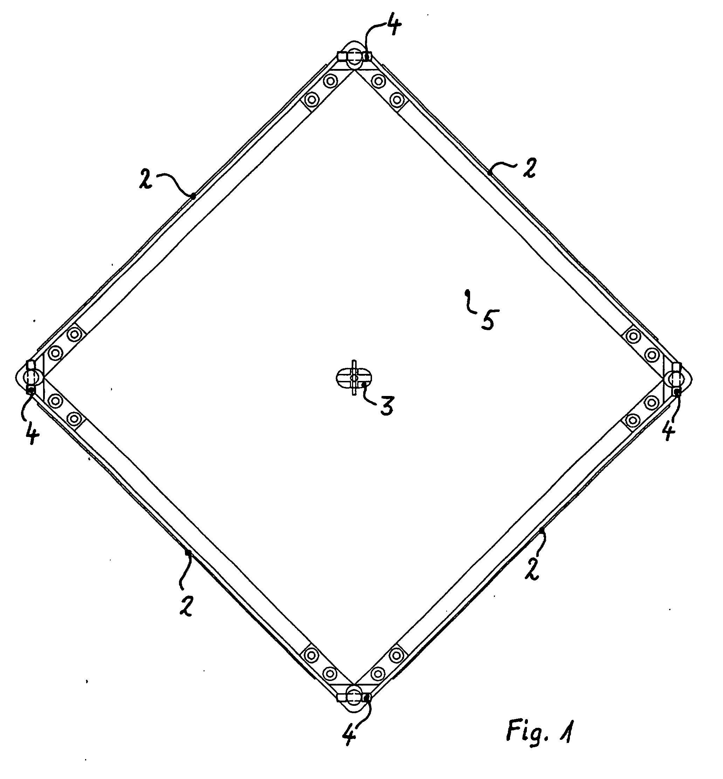

In Figur 1 sind vier Schildplatten (5) über die Drehscharniere (4) nach innen geklappt und durch den Schnellverschluß (3) arretiert. Hierbei schützen die Aufkantungen (2) der Stahlblechhalterung (1) die Kanten der Schildplatten (5).

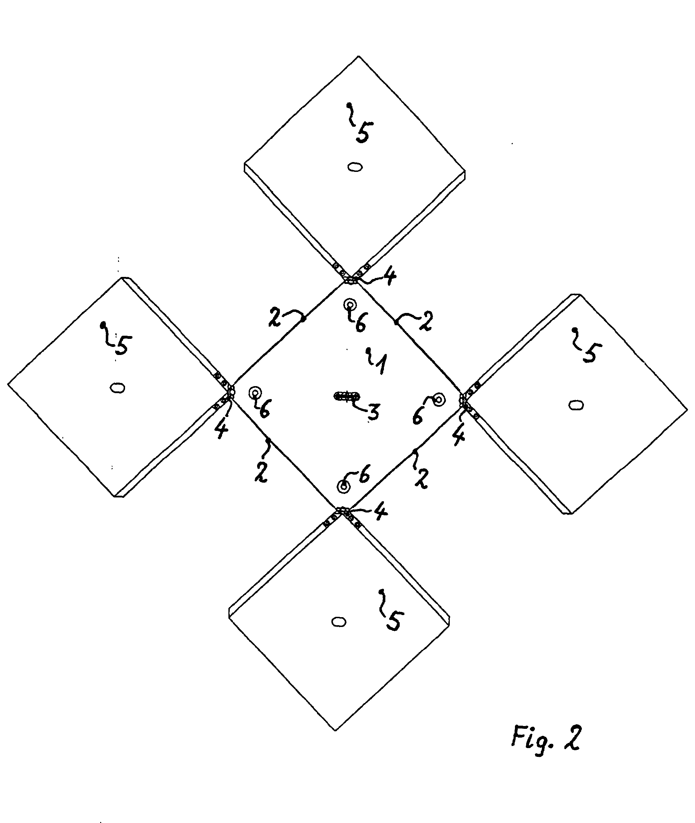

In Figur 2 sind die Schildplatten (5) über die Drehscharniere (4) ausgeklappt, sodaß die Befestigunglöcher (6) in der Stahlblechhalterung (1) sichtbar sind.

## Patentansprüche

1. Wechselhalterung für Gefahrzettel, bestehend aus einer Stahlblechhalterung (1), welche an den Seiten ca. 10 mm hoch um 90 Grad nach vorne gekantet ist (2), wobei die Ecken im Bereich von ca.20 mm ausgenommen sind und diese Stahlblechhalterung (1) vier tiefgezogene Befestigungsbohrungen (6) enthält,
**dadurch gekennzeichnet,**
**daß** diese Stahlblechhalterung (1) ein auf der Spitze stehendes Quadrat darstellt, wobei in einer oder mehreren Ecken jeweils ein Drehscharnier (4) angeordnet ist, welches eine Schildplatte (5) trägt, die beidseitig mit Gefahrzettelsymbolen bedruckt oder beklebt ist und wobei die Stahlblechhalterung (1) in der Mitte einen Schnellverschluß (3) hat, welcher die eingeklappten Schildplatten (5) auf der Stahlblechhalterung (1) arretiert.

2. Wechselhalterung für Gefahrzettel nach dem Oberbegriff von Patentanspruch 1
**dadurch gekennzeichnet,**
**daß** die Stahlblechhalterung (1) ein Vieleck ist von mehr als 4 Ecken, wobei in allen oder mehreren Ecken jeweils ein Drehscharnier (4) angeordnet ist, welches eine Schildplatte (5) trägt, die beidseitig mit Gefahrzettelsymbolen bedruckt oder beklebt ist und wobei die geometrische Form der Schildplatte (5) so ausgeführt ist, daß die Schildplatte (5) über einen in der Mitte der Stahlblechhalterung (1) angeordneten Schnellverschluß (3) auf der Stahlblechplatte (1) arretiert werden kann und das aufgedruckte bzw. aufgeklebte Gefahrzettelsymbol hierbei ein auf der Spitze stehendes Quadrat darstellt von mindestens 250 mm Seitenlänge.

3. Wechselhalterung für Gefahrzettel nach Patentanspruch 1 und 2
**dadurch gekennzeichnet,**
**daß** die Schildplatten (5) im eingeklappten Zustand durch eine mittig angeordnete Schraubverbindung mit der Stahlblechhalterung (1) verschraubt werden.

## Claims

1. A changing holder for danger notes, comprised of a sheet steel holder (1) which at its sides is bent (2) to the front by 90 degrees over a height of about 10 mm, the corners within a range of about 20 mm being excluded, said sheet steel holder (1) including four deep-drawn fastening bores (6),
**characterized in that**
the sheet steel holder (1) represents a square standing on one of its corners, one hinge (4) at a time being arranged in one or more corners, said hinge supporting a sign board (5) imprinted or labelled on both sides with danger note symbols, said sheet steel holder (1) in its center having a quick action closure (3) locking the folded sign boards (5) on the sheet steel holder (1).

2. The changing holder for danger notes according to the preamble of claim 1,
**characterized in that**
the sheet steel holder (1) is a polygon having more than four corners, one hinge (4) at a time being arranged in some or all of the corners, said hinge supporting a sign board (5) imprinted or labelled on both sides with danger note symbols, the geometrical shape of said sign board (5) being of such a design that locking of the sign board (5) on the sheet steel holder (1) is possible by means of a quick action closure (3) arranged at the center of the sheet steel holder (1), and that the imprinted or labelled danger note symbol represents a square standing on one of its corners, the sides of which having a length of at least 250 mm.

3. The changing holder for danger notes according to claims 1 and 2,
**characterized in that**
the sign boards (5) in folded condition are screw-jointed with the sheet steel holder (1) by means of a centrally arranged screw joint.

## Revendications

1. Fixation d'échange pour étiquette de danger, consistant en une fixation en tôle (1) qui est repliée à l'équerre (2) sur les côtés à une hauteur d'env. 10 mm à un angle de 90° vers le devant, dans laquelle les coins sont exclus dans une zone d'env. 20 mm et cette fixation en tôle (1) comporte quatre trous de fixation emboutis (6), **caractérisée en ce que**
cette fixation en tôle (1) a la forme d'un carré disposé en pointe, dans lequel une charnière tournante (4) est disposée respectivement sur un ou plusieurs coins, laquelle porte un panonceau (5) qui est encollé ou imprimé sur les deux faces avec des symboles d'étiquette de danger et dans laquelle la fixation en tôle (1) comporte en son milieu un dispositif de fermeture rapide (3) qui bloque les panonceaux (5) rabattus sur la fixation en tôle (1).

2. Fixation d'échange pour étiquette de danger selon le préambule de la revendication 1, **caractérisée en ce que**
la fixation en tôle (1) est un polygone comportant plus de quatre coins, dans lequel une charnière tournante (4) est disposée respectivement dans tous les coins ou dans plusieurs coins, laquelle soutient un panonceau (5) dont la surface est encollée ou imprimée sur les deux faces avec des symboles d'étiquette de danger et dans laquelle la forme géométrique du panonceau (5) est réalisée de telle sorte que ce panonceau (5) peut être bloqué sur la fixation en tôle (1) par un dispositif de fermeture rapide (3) disposé dans le milieu de la fixation en tôle (1) et pour laquelle le symbole d'étiquette de danger collé ou imprimé a la forme d'un carré disposé en pointe d'au moins 250 mm de longueur de côté.

3. Fixation d'échange pour étiquette de danger selon les revendications 1 et 2, **caractérisée en ce que** les panonceaux (5) en condition rabattus sont boulonnés sur la fixation en tôle (1) par un raccord vissé disposé au milieu.
